Europäisches Patentamt

European Patent Office

Office européen des brevets

(19)

(11) Publication number: **0 069 551**
**A2**

## EUROPEAN PATENT APPLICATION

(12)

(21) Application number: **82303468.1**

(22) Date of filing: **01.07.82**

(51) Int. Cl.³: **F 16 L 41/06**

(30) Priority: **02.07.81 GB 8120551**

(43) Date of publication of application:
**12.01.83 Bulletin 83/2**

(84) Designated Contracting States:
**AT BE CH DE FR GB IT LI LU NL SE**

(71) Applicant: **Forth, Victor Percy**
**"Clydesdale" Dunswell Lane**
**Hull North Humberside HU6 OAG(GB)**

(72) Inventor: **Forth, Victor Percy**
**"Clydesdale" Dunswell Lane**
**Hull North Humberside HU6 OAG(GB)**

(74) Representative: **Oulton, Richard John et al,**
**H.L. Cottrell & Co. 22, Whitefriargate**
**Hull. North Humberside. HU1 2EX.(GB)**

(54) Pipe severing combination.

(57) The invention comprises a pipe severing combination of a pipe severing device (12) which can be used completely to sever a pipe while maintaining a liquid tight seal therearound between the cut ends of the pipe, and a pipe blocking device (40) which can be entered into the pipe through the pipe severing device to block the pipe upstream of the pipe severing device and to permit removal of the latter.

FIG 3

EP 0 069 551 A2

"PIPE  SEVERING  COMBINATION"

DESCRIPTION

This invention relates to a pipe severing device and combination and has particular application to the severing of a pipe without requiring the pipe to be drained of its contents. It also relates to a pipe blocking device for use therewith.

To effect an alteration to any closed or open fluid flow system, it has in the past been necessary for at least that part of the pipe conduit or duct, hereinafter called the pipe, to be effected by the alteration to be drained of its fluid contents and, for example, when the alteration is to add a radiator to, or remove a radiator from, a domestic central heating system it is necessary to drain the whole, or at least a large part, of the circulating system before the alteration can be effected and to recharge the altered system.  As the tradesman to effect the alteration is idle whilst the system is being drained and recharged, and the time for draining and recharging can far exceed the time necessary to complete the alteration to the piping, this arrangement is wasteful and expensive.

In the past there have been a number of proposals by which a branch pipe can be attached to a main pipe without draining the main pipe of its contents but there has never, to date, been any arrangement by which a pipe can be completely severed, to allow an alteration to be made to the pipe without requiring the pipe to be fully drained.

- 2 -

It is an object of the present invention to provide a pipe severing combination having a severing device to permit a pipe to be completely severed without loss of fluid therefrom and then the pipe to be blocked upstream of the severing device to permit its removal. Thus alteration to the pipe can be effected without draining the entire pipe.

A combination in accordance with the present invention comprises a pipe severing device arranged to sever a pipe at any desired location along the pipe length and including a pipe severing means, mounted within the device and operable from the exterior thereof, means for maintaining the severed pipe ends in fixed relationship, means for blocking fluid flow between the severed pipe ends to allow the pipe to be cut at a location spaced from and downstream of the severing device, and means axially displaceable internally along the pipe by entry from the cut end thereof and adapted to block the pipe at any pre-selected location along the pipe length.

In a preferred embodiment, the means for maintaining the severed pipe ends in fixed relationship comprise two shells presenting internal semi-circular surfaces arranged to co-operate to completely surround a length of pipe prior to, during and after severing of the pipe by the pipe cutting means, and one of said shells includes a cylindrical part the axis of which lies at right angles to the cylindrical axis of the internal semi-circular surface of the shell and passes through said axis, the said bore having a diameter which is equal to that diameter upon which the internal semi-circular surface of the shell is based and which is equal to the external diameter of the pipe.

In a preferred embodiment, the pipe cutting means comprise an annular cutter defined by a solid cylindrical body axially slidably disposed in the said cylindrical part, the body including an axial recess in that end to be first presented to a pipe to which the shell is applied and the cutter teeth being formed on the annulus defined by said axial recess; and a rod has one ned region attached to the cutter body remote from the cutter teeth and said rod extends co-axially of the cutter body through an end cap closing the respective end of the cylindrical part and that end region of the rod outwardly of the cylindrical part includes means, or is engageable by means, for effecting axial and rotational displacement of the rod and thereby the cutter body within the cylindrical part.

The other or second shell includes a cylindrical part the internal diameter of which is equal to the diameter of the bore of the cylindrical part containing the cutter and said part of the second shell is axially aligned with said part of the first shell when the shells are assembled on a pipe whereupon, when the cutter has severed the pipe, the cutter end of the cutter body can enter into the bore of the cylindrical part of the second shell. Conveniently, that end of the bore of the cylindrical part of the second shell is closed by an end cap.

The cylindrical body defining the cutter has an axial length greater than the diameter of the pipe to be cut so that, when the cutter has severed the pipe, the said cutter can be axially located to constitute the means for blocking fluid flow between the severed pipe ends.

Said means axially slidable along the pipe for blocking the pipe at a pre-selected location along the pipe length comprise a rod with a resiliently deformable body at or adjacent one end thereof, the body when unstressed having a diameter less than the diameter of the bore of the pipe so as to be axially displaceable along the pipe, and means for applying axial compression to the said deformable body to cause said body to expand radially into frictional contact with the bore of the pipe.

The means for effecting axial compression of the resilient deformable body comprise a tubular member, slidably disposed on the said rod, with means for loading the tube towards that radial face of the resilient body adjacent the tubular body and, in one convenient arrangement, the tubular body is axially loaded against the deformable body by a nut engaged on a threaded part of the rod and engageable with that end of the tubular body remote from the deformable body.

For particular application to high pressure fluid systems, the means axially slidable along the pipe for blocking the pipe may include two resilient deformable bodies in axially spaced relationship each of which when unstressed is axially slidable along the bore of the pipe and which, when axially tensioned, deforms into frictional engagement with the bore of the pipe, and means for supporting and independently deforming the two deformable bodies. Conveniently, the means for supporting and deforming the leading one of said annular bodies pass axially through the trailing deformable body and its means for effecting deformation, and the trailing deformable body and its means for effecting deformation is arranged to be axially displaced relative to the leading resilient body, whereby each deformable body can be acted on independently of the other.

The invention also provides a modified form of the pipe severing device which also is particularly useful in a high fluid pressure pipe. In the modified form, the cylindrical body of said annular cutter comprises an annular seal for the cut pipe ends; the seal being mounted around the cylindrical body so that, when said annular cutter has cut through a pipe, diametrically opposed faces of the anuular seal engage against the respective cut pipe ends; and the annular cutter comprises means for axially compressing the annular seal so as to press the respective parts of the seal engaging the cut pipe ends thereagainst. In this embodiment, the cutter means preferably comprise a hollow shank portion lying outwardly of said cylindrical body and having axially, diametrically opposed, slots formed in the walls of the shank; and said means for effecting compression of the annular seal comprise a pin received axially in said shank portion to lie axially outwardly of said slots, a pressure member received in said slots to be displaceable therein axially of the shank and providing end portions projecting from the respective slots radially of the shank, a compression member seated on the axially outer end of the annular seal and engaged by said projecting end portions of said pressure member, and means, operable from the exterior of the pipe severing device, for displacing said pin to bear on said pressure member to urge it against the compression member to cause the latter axially to compress the seal and thereby force diametrically opposed portions thereby into the respective pipe ends. Prefereably, said means for displacing said pin is a grub screw received in a screw-threaded part of the outer end of said shank portion.

Other features and advantages of the present invention will become apparent from the following description of preferred embodiments of the present invention taken in conjunction with the accompanying drawings, in which:-

Fig. 1 shows a front view of a pipe severing device in accordance with the invention.

Fig. 2 shows a cross-section through the pipe severing device on the line II-II in Fig. 1.

Fig. 3 shows a partial cross-section through the pipe severing device on the line III-III in Fig 2 with the axially displaceable pipe blocking means entered into the severed pipe and,

Fig. 4 shows a longitudinal cross-section through an alternative arrangement for blocking the pipe bore.

Fig. 5 is a part sectional elevation of a modified form of the pipe severing device illustrated in Figs. 1 and 2, showing the device in a start condition;

Fig. 6 is a like figure showing the modified device in a second condition in which a pipe has been cut by the device and,

Fig. 7 is a like figure showing the modified device in a final condition in which it tightly seals the cut pipe ends.

Fig. 8 is a sketch of a further modification of the severing device.

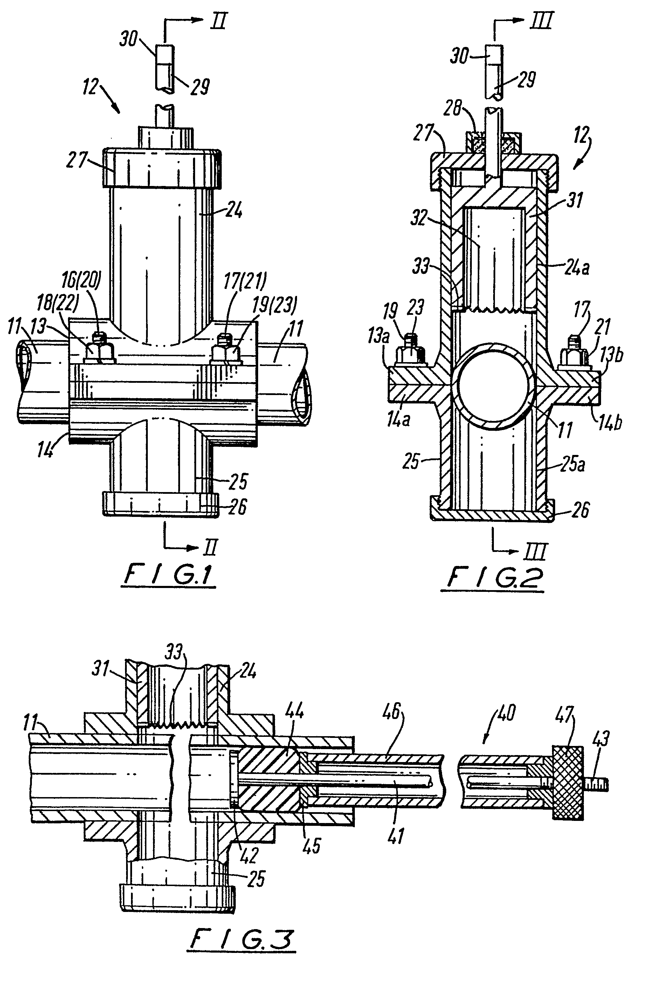

In the example illustrated in Figs. 1, 2 and 3 a pipe 11 to be cut has a pipe severing device, generally indicated by the reference numeral 12, secured thereto, the device 12 comprising two semi-circular shells 13 and 14 each of which presents two flanges 13a, 13b and 14a, 14b respectively. The flange 14a presents two studs 16 and 17 which pass through bores (not shown) in the flange 13a and have nuts 18 and 19 threaded on their free ends, and the flange 14b presents two studs 20 and 21 which pass through bores (not shown) in the flange 13b and have nuts 22 and 23 respectively threaded on their free ends.

The device 12 is applied to the pipe 11 by separating the shells 13 and 14, and closing the shells 13 and 14 onto the pipe 11, at the desired length location of piping 11, from diametrically opposite directions so that the studs 16, 17, 20 and 21 pass through their respective bores in the shell 13, and then applying and tensioning the nuts 18, 19, 22 and 23 to clamp the flanges 13a and 13b to flanges 14a and 14b respectively. With the shell parts 13 and 14 clamped together, as defined above, the said shells 13 and 14 in combination define a through bore which completly surrounds the pipe 11 and in which the pipe 11 is tightly secured along its engaged length.

When the shells 13 and 14 are secured on the pipe 11 the bore 24a of a cylindrical part 24 integral with shell 13 and the bore 25a of the cylindrical part 25 integral with shell 14 are located with their axes on a common axis which passes through the axis of the pipe 11. The bores 24a and 25a each have a diameter equal to the external diameter of the pipe 11, the bores 24a and 25a are open to the pipe 11, and the bores 24a and 25a are closed remote from the shells 13 and 14 respectively by end caps 26 and 27 respectively screwed onto cylindrical parts 24 and 25 respectively.

The cap 27 includes a gland 28 through which a cylindrical rod 29 extends from a squared end 30, outwardly of the cylindrical part 24, through the gland 28 to a cylindrical cutter body 31 slidably disposed in the bore 24a. The cutter body may be integral with, or rigidly secured to, the rod 29 and has an exteranl diameter which is a close sliding fit in the bore 24a of cylindrical part 24. The cutter body 31 has an axial recess 32 extending from that face remote from rod 29 and the axial depth of recess 32 is at least equal to the diameter of the pipe 11. The annular end of the cutter body 31, formed by the recess 32, has teeth 33 cut therein and the axial length of the cutter body is, as will be evident from the proposed depth of the axial recess 32, greater than the diameter of the pipe 11. The axial length of the bore 24a in cylindrical part 24 is greater than cutter body 31 so that the cutter body 31 can be wholly withdrawn into the bore 24a when the shells 13 and 14 are being applied to a pipe 11.

With the shell halves 13 and 14 secured on a pipe 11 as described above the pipe 11 is severed by applying a turning device such as a hand wheel with a rectangular bore or a tap wrench, to the squared end 30 of the rod 29 and, by applying axial pressure to the rod 29 in the direction of the cutter body 31 the cutter body 31 is brought into engagement with the pipe 11 and by rotating the rod 29, and thereby the cutter body 31, whilst maintaining said axial pressure, the cutter body 31 progressively advances through the pipe 11 to sever said pipe 11. As the cutter teeth of cutter body 31 sweep an annular path the cutter body 31 effectively severs a slug from the length of the pipe and, as the cutter teeth advance into the pipe 11, the slug progressively enters into the axial recess in the cutter body 31 until, on completion of the cutting operation, the slug is frictionally retained in the axial recess, the slug will remain in the recess but generally the slug will fall from said recess into the bore 25a, together with the greater part of the cuttings from the cutting operation.

When the cutting operation has been completed the cutter body 31 is axially located with its lower regions entered into the bore 25a and its upper regions entered into the bore 24a (as viewed in Fig. 2) so that the body 31 effectively closes the flow passage along the pipe 11 and, with the cutter body 31 so located, the end cap 26 can be unscrewed from the cylindrical part 25 and the part 25 drained of its fluid contents and cleared of the pipe cuttings, and the slug, whereafter the end cap 26 can be replaced.

When the pipe severing device has effectively severed the pipe 11 and the cutter body 31 is effectively blocking the pipe 11 the first valve in the pipe 11 downstream of the device 12 is closed, the pipe 11 is cut, conveniently with a hacksaw, between three and six inches downstream of the device 12, and the pipe 11 between the device 12 and the closed valve is drained off through the hacksawed cut. Once the isolated length of pipe 11 has been drained the hacksawed ends of the pipe 11 are displaced, at right angles to the axis of the pipe 11, to expose the bore of that part of pipe 11 downstream of the device 12 and retained by the device 12.

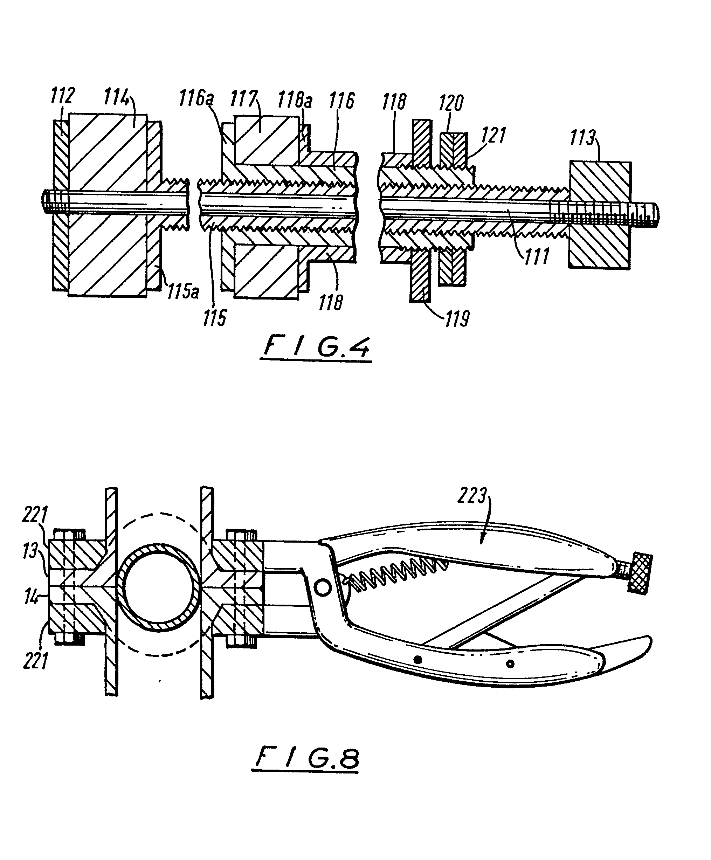

As stated the present invention proposes a pipe cutting device in combination with a means axially slidable along the pipe and adapted to block the pipe at any desired location along the pipe length and in the example illustrated in Fig. 3 the said means comprise the device, generally indicated by reference numeral 40 and which comprises a rod 41 with a flange 42 on one end and a screw thread 43 on its other end.   An annular resiliently deformable body 44 is threaded on the rod 41 so as to engage its leading radial face with the flange 42, a loose washer 45 in then threaded on the rod 41 to engage the trailing radial face of the body 44 and a tubular member 46 is then threaded onto the rod 41 to engage its leading radial face with the loose washer 45.   The combined axial length of the body 44, washer 45, and tubular member 46 is less than the axial length of the rod 41 to allow a knurled hand nut 47 to be threadedly engaged on the thread 43.

The diameter of the flange 42, the loose washer 45, and the tubular member 46, and the diameter of the body 44 when unstressed, are all less than the diameter of the bore of the pipe 11 so that, when the pipe 11 has been severed downstream of the device 12 and the severed pipe ends have been displaced to expose the bore of the length of pipe 11 retained with the device 12 downstream of device 12, the device 40 can be entered into the open end of the pipe 11, with the flange 42 leading, and the body 44 can be located in any desired location along the length of the tube 11, downstream of the body 12 and retained by the body 12, downstream of the cutter body 31 which is blocking the pipe 11.   When the body 44 has been located in the desired position it is only necessary to rotate the knurled nut 47, to axially load the tubular member 46 against loose washer 45 whereupon the body 44 is axially compressed, and thereby radially expanded, into frictional contact with the bore of the pipe 11, thus effectively blocking the pipe 11.

With the resilient body 44 effectively blocking the pipe 11 downstream of the cutter body 31 the cutter body 31 can be retracted into the bore 24a and, when the said cutter body 31 has been fully retracted clear of the bore of pipe 11, the knurled nut 47 can be carefully withdrawn along thread 43, to allow the flexible resilient body 44 to radially contract to that diameter at which the said body 44 can slide along the bore of pipe 11, and the device 40 can then be slidably advanced along the bore of the pipe 11 until the body 44 lies upstream of the path of the cutter body 31 whereupon, by again rotating the knurled nut 47, the body 44 can be expanded to close the pipe 11 upstream of the path of the cutter body 31.

When the resilient body 44 is blocking the bore of the pipe 11 upstream of the path of the cutter body 31 the device 12 can be removed from the pipe 11, by simply unscrewing the nuts 18, 19, 20 and 21, to allow the shells 13 and 14 to be detached from the pipe 11 and, when the device 12 and the length of pipe 11 downstream of the device 12, have been removed the upstream end of the pipe 11 is fully exposed and can be dressed to have the upstream end of a conventional valve applied thereto. The valve is entered into engagement with the exposed end of the pipe 11 by displacing the closure member of the valve to its open position and passing the valve along the device 40, the device 40 enteringinto the flow path through the valve. When the upstream end of the valve has been secured to the pipe 11 the knurled nut 47 is axially displaced, to allow the body 44 to radially contract to a sliding fit in the bore of the pipe 11 and the device 40 is then withdrawn to that position at which the body 44 can close the outlet end of the valve, whereupon the valve closure member can be displaced to its position closing the flow path from pipe 11 and the device 40 can be removed.

With the valve closed the alteration to the piping can then be effected between the said valve and the downstream severed end of the pipe 11.

It will be appreciated that when the body 44 is the only means of obstructing fluid flow along the pipe 11, and said body 44 is in a position for slidable displacement along the bore of pipe 11 there may be some fluid leakage from the pipe 11 but such leakage will be small and readily dealt with. Alternatively, as for particular use with high pressure systems, leakage from the pipe 11 can be avoided by using the device illustrated in Fig. 4.

It will be appreciated that in the event that there is not a convenient valve downstream of the device 12 and which can be used to isolate the length of piping 11 between the device 12 and the said valve two devices 12 can be secured on the pipe 11, in spaced apart relationship, the cylindrical cutters 31 of the two devices can sever the pipe 11 at the respective locations, and the pipe 11 can be split between the two devices 12 and a valve secured to the upstream end of the pipe 11 entering the upstream one of the devices 12 and a valve secured on the downstream end of the pipe 11 of the downstream one of said devices 12, and the alteration to the piping can then be effected between the two valves.

In the arrangement illustrated in Fig. 4 a rod 111 has an annular nut 112 securely screwed on one end and a knurled hand nut 113 engaged with a screw-thread on the end of rod 111 remote from the nut 112. A first annular resiliently deformable body 114 is slidably entered onto the rod 111 to present its leading radial face in contact with the nut 112, a tubular member 115 with an integral flange 115a on one end is slidably advanced along the rod 111 with the flange 115a leading until flange 115a engages the trailing radial face of the member 114 and the knurled nut 113 is thereby engageable with the trailing end of tubular member 115. Thus, by rotating knurled nut 113 to advance said nut axially towards the nut 112 the annular flange 115a can be loaded against the body 114 to cause axial compression, and thereby radial expansion, of the body 114.

The tubular member 115 is externally screw-cut and a tubular member 116 is threadedly engaged on the member 115 and presents an integral flange 116a on that end of member 116 adjacent the flange 115a of member 115. A second annular resiliently deformable body 117 is mounted on the member 116 with its leading radial face in contact with the flange 116a, and a tubular member 118, slidably disposed on the tubular member 116, presents an integral flange 118a engageable with the trailing radial face of the body 117. That end of tubular member 116 remote from the flange 116a is screw-cut to receive a knurled nut 119 engageable with the tubular member 116 and two lock nuts, 120 and 121, are locked on the end region of tubular member 116 remote from flange 116a to assist manual or spanner assisted rotation of the member 116 on tubular member 115.

The axial length of the tubular member 115 from the flange 115a to that end engageable by the knurled nut 113 is greater than the axial length of the tubular member 116 so that tubular member 116, supporting the deformable body 117 and tubular member 118, can be axially displaced along the tubular member 115. In a preferred embodiment the axial displacement of the tubular member 116 relative to tubular member 115 is in the region of three to four times the diameter of the bore of the pipe to be blocked by the device.

The device illustrated in Fig. 4 operates as follows:-

After a device 12 has been attached to the pipe and the pipe has been severed by the cutter body 31 and the pipe downstream of the device 12 has been severed to expose the bore of said pipe the device illustrated in Fig. 4 is entered into the bore of the pipe leading to the device 12, the bodies 114 and 117 being unstressed, and the device being inserted with the nut 112 and body 114 leading.

The device is slidably inserted into the pipe 11 until the body 114 lies adjacent the block 31 of the device 12 (which is closing the pipe 11) whereupon, by rotating the knurled nut 113, the body 114 is axially loaded and expands to close the bore of the pipe 11 downstream of the cutter body 31. At this stage the cutter body 131 can be withdrawn clear of the bore of the pipe 11.

The tubular member 116, with the body 117 still unstressed, is rotated relative to tubular member 115 so that the co-operating screw threads between the tubular members 115 and 116 advance the member 116 towards the left (as viewed in Fig. 4), such rotation being effected by manually rotating the lock nuts 120, 121, when necessary with the assistance of a spanner. The member 116 is advanced along member 115 until the body 117 lies closely adjacent the expanded body 140.

The body 117 is then axially stressed by rotating the hand nut 119, the body 117 expands radially to frictionally engage the bore of the pipe 11 to effectively block the pipe 11 and thereafter the body 114 is relaxed, by rotating knurled hand nut 113, to radially contract. With the pipe bore blocked by the expanded body 117 and the body 114 relaxed to be displaceable along the bore of pipe 11 the tubular member 115 is rotated, in the appropriate direction, to advance said member and the resilient body 114 mounted thereon towards the left (as viewed in Fig. 4) whereupon the body 114 passes through the severed part of the pipe 11 and into the pipe 11 upstream of the said severed part. With the member 114 located upstream of the severed section of the pipe the said body is again expanded, by rotating the knurled nut 113, to effectively block the pipe 11 upstream of the device 12, whereupon the device 12 can be removed from the pipe. Thus, by the above arrangement, the pipe 11 is always blocked prior to and subsequent to withdrawal of the cutter body 31 from its pipe closure condition.

As will be seen from Fig. 4 the diameters of all the solid parts of the device are less than the unexpanded diameters of the bodies 114 and 117 so that, with the device 12 removed from the pipe, the downstream end of the pipe 11 supported by the device 12 can be axially removed and those parts of the device protruding from the upstream end of the pipe 11 can pass through the bore of a through valve to be attached to the severed upstream end of the pipe 11 after said end has been dressed.

It will be seen that with the device proposed by the present invention a pipe can be cut in one, or two spaced apart locations, and a valve fitted to the pipe at each severed location without draining the pipe of its fluid contents and any piping alterations to be effected can be carried out and the altered part of the piping readily and easily attached into the fluid circuit.

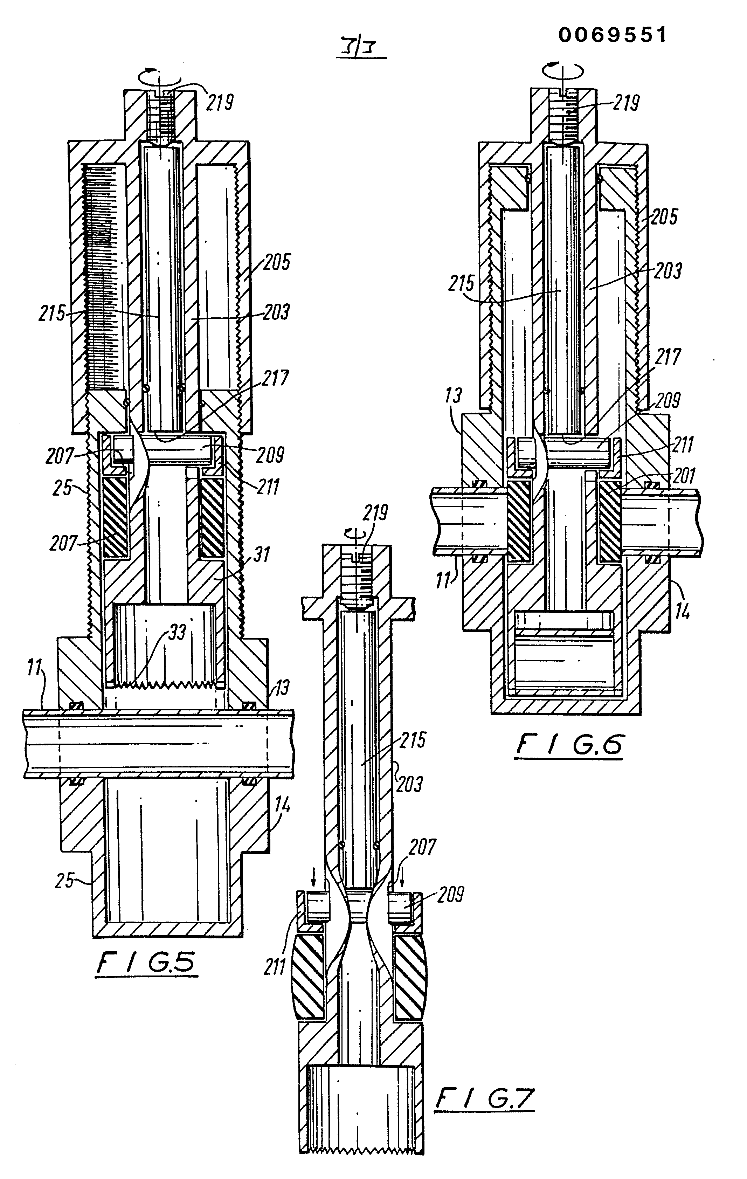

Referring now to Figs. 5 and 7, the modified pipe severing device is broadly similar to that illustrated in Figs. 1 and 2 and like parts in the two devices are designated by like reference numerals. In the modified device, however, the cylindrical cutter body 31 is formed with a reduced diameter portion on which is mounted an annular seal 201; the seal being positioned so that, when the cutter body moves to the position shown in Fig. 6 after effecting a cut through the pipe 11, diametrically opposed portions of the seal engage the cut pipe ends as shown in Fig. 6. The modified device also comprises means for axially compressing the seal so that, when positioned as shown in Fig. 6, the portions of the seal in conatct with the cut pipe ends can be forced against and, indeed, into the pipe ends as shown in Fig. 7. In the modification, the cutter means comprise a hollow shank portion 203, disposed axially outwardly of the cutter body 31, in place of the rod 29, to rotate the cutter body 31; the rotation in this instance being effected by mannual rotation of a skirt 205 formed integrally with the shank and screw-threadedly received on an external and fine screw thread on the exterior of the part of the cylinder integral with shell 13. The means for axial compression of the seal comprise axial, diametrically opposed slots 207 formed in the walls of the sleeve and a pressure member in the form of a bar 209 passed through the slots to extend radially therefrom and to be displaceable axially of the shank within the slots. The extending ends of the bar 209 are received in a compression member in the form of a cup 211 the bottom 213 of which is perforated to admit the cutter body 31 therethrough; and the cup rests on the axially outer end of the annular seal 201. The hollow shank receives a pin 215 for axial displacement therein so that a respective end 217 of the pin can be brought to bear on the bar 209 to urge it against the bottom of the cup 211 to cause the latter axially to compress the annular seal to the condition shown in Fig. 7. The displacement of the pin is effected by a grub screw 219 received in a screw-threaded portion of the outer end of the shank. When the seal is to be released, the grub screw is rotated to release the pressure on bar 209 and this returns the pin 215 under the resilient axial expansion of the seal.

While in practice it may not be necessary to tightly seal the downstream part of the cut pipe, it will be understood that the use of an annular seal, which leads to this result, is a convenient, simple and practicable means for sealing the upstream part of the pipe.

The further modification shown in Fig. 8 is concerned with providing the severing device with means to permit a bolt fastening of the shells 13, 14, to a pipe to be dispensed with. For this purpose, each shell is contacted by and may be made integral with a respective jaw 221 of a "molegrip" type wrench 223 - i.e. one which when the jaws are clamped on an object, and the handles are locked in place so that no further manual effort is needed to keep the jaws in place.   Since this type of wrench is in itself well known it is considered that further description thereof is unnecessary.   It will be understood that this modification may be applied to both the severing device of Figs. 1 and 2 and the device of Figs. 5 and 7.

It will be evident to persons skilled in the art that many modifications may be made in the illustrated apparatus within the spirit and scope of the present invention.

0069551

- 15 -

<u>CLAIMS:</u>

1.  A pipe severing combination comprising a pipe severing device arranged to sever a pipe at any desired location along the pipe length; characterised in that the pipe severing device contains therewithin pipe severing means (31, 33) operable from the exterior of the device to sever a pipe (11) and has means for maintaining the severed pipe ends in fixed relationship and means (29, 30, 31) for blocking fluid flow between the severed pipe ends to allow the pipe (11) to be cut at a location spaced from and downstream of the severing device; and characterised in that the combination comprises means (41, 42, 44; 111-121) axially displaceable internally along the pipe from a cut end thereof through said pipe severing device on withdrawal of said blocking means from a pipe blocking position and adapted to block the pipe at a pre-selected location along the pipe length.

2.  A pipe severing combination according to claim 1, wherein said means (13,14) for maintaining the severed pipe ends in fixed relationship comprise two shells (13, 14) presenting internal semi-circular surfaces arranged to co-operate to completely surround and support a length of pipe prior to, during,and after severing of the pipe by the pipe severing means.

3.  A pipe severing combination according to claim 2, wherein one of said shells (13) includes a cylindrical part (24) the axis of which lies at right angles to the cylindrical axis of the internal semi-circular surface of the shell and passes through said axis; and the cylindrical part has an internal diameter which is equal to that diameter upon which the internal semi-circular surface of the shell is based and which is equal to the external diameter of the pipe.

4.  A pipe severing combination according to claim 3, wherein the pipe severing means (31,33) comprise an annular cutter (31) defined by a solid cylindrical body slidably disposed internally of said cylindrical part; the body including an aperture recess (32) in that end to be first presented to a pipe to which the shell is applied and having a cutter edge (33)formed on the annulus defined by said axial recess.

5.  A pipe severing combination according to claim 3 or 4, wherein the pipe severing device comprises a rod (29) one end region of which is attached to the cutter body (31) remote from the cutter edge; the rod extending co-axially with the cutter body through an end cap (27) closing an end of said cylindrical part; and wherein that end region of the rod outwardly of the cylindrical part includes a means (30) for effecting axial and rotational displacement of the rod and thereby of the cutter body within the cylindrical part.

6. A pipe severing combination according to claim 3, 4 or 5, wherein the other shell (14) includes a cylindrical part (25) the internal diameter of which is equal to the diameter of the bore of the cylindrical part (24) containing said cutter, and the axis of the cylindrical part of said other shell (14) is axially aligned with the axis of the cylindrical part of the first shell (13) when the two shells are assembled on a pipe whereby, when the cutter (31) has severed the pipe, the cutter end of the cutter body can enter into the interior (25a) of the cylindrical part of the other shell (14).

7. A pipe severing combination according to claim 4 or claim 5 or 6, as dependent thereon wherein said cylindrical body of said annular cutter (31) has an axial length greater than the diameter of the pipe to be cut so that, when the cutter has severed the pipe, the cutter can be axially located to constitute said means for blocking fluid flow between the separate pipe ends.

8. A pipe severing combination according to any of the preceding claims, wherein said means (41, 42, 44) axially slidable along the pipe for blocking the pipe at a pre-selected location along the pipe length, comprise a rod (41) with a resilient deformable body (44) mounted thereon, the body when unstressed having a diameter less than the diameter of the bore of the pipe so as to be axially displaceable along the pipe therewithin, and means (43, 45, 46, 47) for applying axial compression to said deformable body to cause said body to expand radially into frictional contact with the bore of the pipe.

9. A pipe severing means according to claim 8, wherein said means (43, 45, 46, 47) for effecting axial compression of the resilient deformable body comprises a tubular member (46), slidably disposed

on said rod, with means (43, 47) for loading the tube towards that radial face of the resilient body adjacent the tubular body.

10. A pipe severing combination according to claim 9, wherein said tubular body (46) is axially loaded against the deformable body by a nut (47) engaged on a threaded part (43) of the rod and engageable with that end of the tubular body remote from the deformable body.

11. A pipe severing combination according to any of claims 1 to 7, wherein said means (111-121) axially slidable internally of the pipe for blocking the pipe include two resilient deformable bodies (114, 117) in axially spaced relationship each of which when unstressed is axially slidable along the bore of the pipe and which, when axially tensioned, deforms into frictional engagement with the bore of the pipe, and means (112, 113, 115, 116, 118, 119, 120, 121) for supporting and independently deforming the two deformable bodies.

12. A pipe severing combination according to claim 11, wherein said means (112, 113, 115) for supporting and independently deforming the leading one (114) of the two annular bodies pass axially through the trailing deformable body (117) and its means (116, 118, 119) for effecting deformation, and the trailing deformable body (117) and its means (116, 118, 119) for effecting deformation are arranged to be axially displaced relative to the leading resilient body, whereby each deformable body can be acted on independently of the other body.

13. A pipe severing combination according to claim 4 or any one of claims 5 to 12 as dependent thereon, wherein said solid cylindrical body of said annular cutter (31) comprises an annular seal (201) for the cut pipe ends; the seal being mounted around the cylindrical body (31) so that, when said annular cutter has cut through a pipe, diametrically opposed faces of the annular seal engage against the respective cut pipe ends; and wherein said annular cutter comprises means (207, 209, 211, 215, 219) for axially compressing the annular seal so as to press the respective parts of the seal engaging the cut pipe ends thereagainst.

14. A pipe severing combination according to claim 13, wherein said cutter means (31) comprise a hollow shank portion (203) lying axially outwardly of said cylindrical body (31) and having axial, diametrically opposed, slots (207) formed in the walls thereof; and wherein said means for effecting compression of the annular seal (201) comprise a pin (215) received axially in said shank portion (203) to lie axially outwardly of said slots (207), a pressure member (209) received in said slots (207) to be displaceable therein axially of the shank and providing end portions projecting from the respective slots radially of the shank, a compression member (211) seated on the axially outer end of the annular seal and engaged by said projecting end portions of said pressure member (209), and means (219), operable from the exterior of the pipe severing device, for displacing said pin (215) to bear on said pressure member (209) to urge it against the compression member (211) to cause the latter axially to compress the seal and thereby force diametrically opposed portions thereof into the respective pipe ends.

15. A pipe severing combination according to claim 2 or any of the preceding claims as dependent thereon, further comprising a wrench of the kind which locks the handles in position once the jaws are clamped on an object, to clamp the shells to a pipe.

FIG.1

FIG.2

FIG.3

_F I G.4_

_F I G.8_

0069551

_F I G.5_

_F I G.6_

_F I G.7_